# EUROPEAN PATENT SPECIFICATION

(11) **EP 1 523 241 B1**
(45) Date of publication and mention of the grant of the patent: **02.07.2008**
(21) Application number: 03762473.1
(22) Date of filing: 02.07.2003
(51) Int. Cl.: A23G 4/00, A23G 4/06, A23G 4/18

(54) **COMPRESSED RESIN MODERATED CHEWING GUM**
KOMPRIMIERTE HARZ-MODERIERTE KAUGUMMI
GOMME A MACHER MODEREE DE RESINE COMPRIMEE

(30) Priority: 02.07.2002 WO PCT/DK02/00461; 02.07.2002 WO PCT/DK02/00462
(43) Date of publication of application: 20.04.2005
(73) Proprietor: Gumlink A/S, 7100 Vejle (DK)
(72) Inventor: THORENGAARD, Bitten, DK-7120 Vejle st (DK); BOESEN, Dorthe, Schackinger, DK-7100 Vejle (DK); NISSEN, Vibeke, Taulov, 7000 Fredericia (DK)
(74) Representative: Olesen, Kaj
(86) International application number: PCT/DK2003/000465
(87) International publication number: WO 2004/004480

(56) References cited:
- EP-A- 0 221 850
- WO-A-01/72139
- WO-A-02/051258
- WO-A-02/069729
- WO-A-02/071860
- WO-A-02/078459
- DE-A- 2 808 160
- US-A- 4 753 805
- US-A- 5 087 459
- US-A- 5 536 511
- US-A- 5 866 179
- US-A1- 2001 002 998
- US-B1- 6 200 608
- US-B1- 6 322 806
- SECTZER J.: "Chewing gums embrace good for you profile" CANDY INDUSTRY, vol. 166, no. 9, 2001, page 36-40 XP008023005

## Description

### Field of the invention

The present invention relates to chewing gum granules and chewing gum made on the basis of such chewing gum granules.

### Background of the invention

Several different processes for manufacturing of chewing gum are known within the art. The different processes may be overall categorized in basically two different processes; that is chewing gum mechanically mixed on the basis of a gum base compounds or chewing gum compressed on the basis of more or less discrete gum base particles. The first type of chewing gum generally benefits from a very comfortable texture, among several different parameters, most likely due to the mechanically mixing of the polymers and for example the flavors. One disadvantage of such type of process and chewing gum is, however, that the different ingredients, such as encapsulated flavor, active ingredients, etc. may be more or less destroyed or degraded by the mixing process.

The second type of chewing gum generally benefits from a relatively gentle handling of vulnerable additives, such as the above-mentioned flavors or active ingredients. One disadvantage of such type of chewing gum is, however, that the resulting chewing gum tablet may typically disintegrate too easy, especially during the initial chew of the gum.

Different proposals in order to obtain compressed chewing gum have been made in the prior art. Typically, such techniques are directed to adaptation of the manufacturing process. WO 03/011045 discloses a technique where the sticking or adhering of the chewing gum mixture to the tableting process equipment is dealt with by controlling the size of the mixture granules.

US 6322806 B1 discloses a process involving shredded or powdered gum base being pressed into a tableted chewing gum center, and discloses a chewing gum comprising a tableted chewing gum center and a coating.

WO 02/071860 and WO 02/069729 both disclose a method of making a particulated gum base blend comprising a first and a second gum base ingredient forming a combined ingredient having a particulated free flowing form. The obtained product is advantageously added to conventional gum mixers. A method comprising tabletizing the particulate gum base is also mentioned. However, there is no indication of any intention to tabletize the particulated blend to obtain a chewing gum comprising flavor and having the presently claimed composition.

It is one object of the invention to provide a chewing gum compression chewing gum composition, which, when processed by means of compression, provides a texture like conventionally mixed chewing gum.

### Summary of the invention

The invention relates to a compressed chewing gum comprising elastomer in the amount of up to 32% by weight, preferably 5% to 25% by weight of the chewing gum,
resin in the amount of 1.5% to 55% by weight, preferably 4% to 30% by weight of the chewing gum,
and chewing gum additives,
wherein said resin comprises
- natural resin in the amount of 0.5% to 35% by weight, preferably 4% to 30% by weight of the chewing gum,
- synthetic resin in the amount of 1% to 35% by weight, preferably 4% to 30% by weight of the chewing gum,
the ratio between the synthetic resin and the natural resin being from 0.5 to 7, preferably from 0.9 to 6.0, and wherein said compressed chewing gum comprises flavor.

According to the invention, the percent by weight measure in relation to the chewing gum refers to the complete chewing gum, except any optional coating.

According to the invention, a compressed chewing gum has been made by means of compression of gum base granules and chewing gum additives.

According to the invention, the processing abilities of chewing gum base for the purpose of providing a tableted compressed chewing gum is obtained by the providing of a gum base which by nature, i.e. due to the composition, has improved properties with respect to e.g. granulation or other similar pre-processing.

According to the invention it has been realized that natural resins may in fact be used actively for the purpose of moderating the tackiness between two opposing limits, i.e. a lower limit defined by the minimum desired tackiness of the chewing gum and an upper limit defined by the process according to which the chewing gum is made.

Thus, when applying a natural resin in compressed chewing gum, an advantageous initial chew may be obtained. On the other hand, resin tends to complicate the pre-processing of the gum base materiel due to sticking to the processing equipment, such as granulation equipment, compression equipment, etc.

According to an embodiment of the invention, the desired tackiness may be obtained by applying both natural and synthetic resins in the granulate gum base and by adjusting the mutual balance between the applied amounts of natural and synthetic resins.

According to the invention, a granule is understood as a small particle whole or completely formed by gum base or derivatives thereof. Typically, granules in large numbers form a granule mixture, made by granulation e.g. by known processes of a gum base "raw material". The gum base granule mixture may typically directly or after pre-processing be compressed to form a tableted (also referred to as a compressed) chewing gum.

According to the invention, the presence of natural resins ensures several important features when dealing with granule mixtures for chewing gum, such as improved stickiness of the final chewing gum tablet, improved robustness to softeners, flavors or other relevant chewing gum additives. On the other hand the balancing between the synthetic and the natural resins ensures that the available gum base may in fact be granulated e.g. by milling without or with reduced risk of sticking to processing equipment. Moreover, a simplified process may be obtained due to the fact that milling of the gum base granules may optionally be completely avoided e.g. by applying a high-speed mixer, e.g. a Lipp Mixer.

According to the invention, the choice of elastomer plasticizers, i.e. natural or synthetic resins, will vary depending on the specific application, and on the type of elastomer(s) being used.

In an embodiment of the invention, said natural resin comprises one or more different natural resins.

According to an embodiment of the invention, the nature of the different natural resins may typically vary e.g. with respect molecular weight, molecular structure and/or origin.

In an embodiment of the invention, said synthetic resin comprises one or more different synthetic resins.

According to an embodiment of the invention, the nature of the different synthetic resins may typically vary e.g. with respect to molecular weight. Thus, a combination of for example a low molecular weight and a high molecular weight synthetic resin, e.g. PVA is typically preferred as the synthetic resin forming part of the gum base formulation.

In an embodiment of the invention, the ratio between the synthetic resin and the natural resin is from 0.5 to 7, preferably from 0.9 to 6.0.

According to an embodiment of the invention, a natural resin should always be moderated by synthetic resin, so that the amount of synthetic resin is always at least half the amount of the natural resin present in the gum base and at most in an amount of not more than seven times the amount of natural resins.

In an embodiment of the invention, the ratio between the synthetic resin and the natural resin is from 0.9 to 2.0, preferably from 0.9 to 1.5.

According to an embodiment of the invention, a natural resin should always be moderated by synthetic resin, so that the amount of synthetic resin is always at least 0.9 of the amount of the natural resin present in the gum base and not more than two times the amount of natural resin in the gum base.

According to a preferred embodiment of the invention, the natural resin should, when applied in relatively large amounts, e.g. 15 to 35% of the gum base be counteracted or supplemented by an one-to-one relationship with the synthetic resin of the gum base.

In an embodiment of the invention, said natural resin comprises rosin esters.

In an embodiment of the invention, said natural resin comprises terpene resins, e.g. derived from alpha-pinene, beta-pinene, and/or d-limonene, natural terpene resins, glycerol esters of gum rosins, tall oil rosins, wood rosins or other derivatives thereof such as glycerol esters of partially hydrogenated rosins, glycerol esters of polymerized rosins, glycerol esters of partially dimerised rosins, pentaerythritol esters of partially hydrogenated rosins, methyl esters of rosins, partially hydrogenated methyl esters of rosins or pentaerythritol esters of rosins and combinations thereof.

In an embodiment of the invention, said synthetic resin comprises polyvinyl acetate, vinyl acetate-vinyl laurate copolymers and mixtures thereof.

According to an embodiment of the invention, polyvinyl acetate (PVA) may for example have a GPC average molecular weight in the range of 1,000 to 90,000, such as the range of 3,000 to 80,000 Mn including the range of 30,000 to 50,000.

According to an embodiment of the invention, the vinyl acetate-vinyl laurate copolymers, e.g. having a vinyl laurate content of 5 to 50% by weight, such as 10 to 45% by weight of the copolymer.

In an embodiment of the invention, said granulated gum base comprising at least one high molecular weight elastomer in an amount of 0% to 15% by weight of said gum base, preferably in an amount of 3% to 15% by weight of said gum base.

In an embodiment of the invention, the molecular weight of said at least one high molecular weight elastomer is from 50000 g/mol to 800000 g/mol Mn.

In an embodiment of the invention, said granulated gum base comprising at least one low molecular weight elastomer is in an amount of 0% to 25% by weight of said gum base.

In an embodiment of the invention, the molecular weight of said at least one low molecular weight elastomer is from 1000 g/mol to 50000 g/mol Mn.

In an embodiment of the invention, said gum base has been added lubricants, anti-adherents and glidants such as metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

According to a preferred embodiment of the invention, the gum base is added lubricants, anti-adherents and glidants in an amount as small as possible thereby avoiding reduced texture properties.

In an embodiment of the invention, the gum base is free of lubricants, anti-adherents and glidants.

According to a preferred embodiment of the invention, the gum base is free of lubricants, anti-adherents and glidants, thereby obtaining as much texture-improvement as possible by means of the applied combination of synthetic and natural resins.

In an embodiment of the invention, the natural resins provide an improved and sticky texture of the gum base when applied in chewing gum formulation.

In an embodiment of the invention, said gum base is wax free.

According to an advantageous embodiment of the invention, a wax-free gum base formulation has been obtained having advantageous texture properties when the gum base formulation is moderated with respect to the balance between the synthetic and the natural resins.

In an embodiment of the invention, said gum base is fat free.

A fat-free chewing gum formulation benefits for example from improved healthiness.

In an embodiment of the invention, the gum base has a water content of less than 2.0%, preferably less than 1.5% by weight of the gum base.

In an embodiment of the invention, said gum base comprises filler in an amount of 0% to 50% by weight of the gum base.

In an embodiment of the invention, said gum base comprises synthetic resin in an amount of 15% to 40% by weight of the gum base.

According to an embodiment of the invention, a relatively high amount of natural resin, e.g. 20% by weight of the gum base, would typically result in a somewhat reduced use of synthetic resin. An example of such an application would be a ratio of 1-to-1, whereas reduced content of natural resin advantageously may result in an increased ratio.

In an embodiment of the invention, said gum base comprises emulsifiers and/or fats in an amount of 10% to 40% by weight of the gum base.

In an embodiment of the invention, said gum base comprises wax in an amount of 2% to 30% by weight of the gum base.

In an embodiment of the invention, at least a part of the flavoring agents has been teared into at least a part of the gum base previous to compression.

According to an embodiment of the invention, such tearing or incorporation of flavor into the gum base or at least a part of the gum base may e.g. imply mixing of gum base components mechanically during addition of flavor components.

In an embodiment of the invention, said chewing gum additives comprises sweeteners in the amount of 5 to 95% by weight of the chewing gum, more typically 20 to 80% by weight, such as 30 to 60% by weight of the chewing gum.

In an embodiment of the invention, the compressed chewing gum tablet comprises 0.1% to 15% by weight of flavoring agents, preferably 0.8% to 5% by weight.

In an embodiment of the invention, said natural resin comprises one or more different natural resins.

According to an embodiment of the invention, the nature of the different natural resins may typically vary e.g. with respect to molecular weight, molecular structure and/or origin.

In an embodiment of the invention, said synthetic resin comprises one or more different synthetic resins.

According to an embodiment of the invention, the nature of the different synthetic resins may typically vary e.g. with respect to molecular weight. Thus, a combination of for example a low molecular weight and a high molecular weight synthetic resin, e.g. PVA is typically preferred as the synthetic resin forming part of the gum base formulation.

In an embodiment of the invention, the ratio between the synthetic resin and the natural resin is from 0.5 to 7, preferably from 0.9 to 6.0.

According to an embodiment of the invention, a natural resin should always be moderated by synthetic resin, so that the amount of synthetic resin is always at least half the amount of the natural resin present in the gum base and at most in an amount of not more than seven times the amount of natural resins.

In an embodiment of the invention the ratio between the synthetic resin and the natural resin is from 0.9 to 2.0, preferably from 0.9 to 1.5.

According to an embodiment of the invention, a natural resin should always be moderated by synthetic resin, so that the amount of synthetic resin is always at least 0.9 of the amount of the natural resin present in the gum base and not more than two times the amount of natural resins in the gum base.

According to a preferred embodiment of the invention, the natural resin should, when applied in relatively large amounts, e.g. 15 to 35% of the gum base, be counteracted or supplemented by an one-to-one relationship with the synthetic resins of the gum base.

In an embodiment of the invention, said natural resin comprises rosin esters.

In an embodiment of the invention, said natural resin comprises terpene resins, e.g. derived from alpha-pinene, beta-pinene, and/or d-limonene, natural terpene resins, glycerol esters of gum rosins, tall oil rosins, wood rosins or other derivatives thereof such as glycerol esters of partially hydrogenated rosins, glycerol esters of polymerized rosins, glycerol esters of partially dimerised rosins, pentaerythritol esters of partially hydrogenated rosins, methyl esters of rosins, partially hydrogenated methyl esters of rosins or pentaerythritol esters of rosins and combinations thereof.

In an embodiment of the invention, said synthetic resin comprises polyvinyl acetate, vinyl acetate-vinyl laurate copolymers and mixtures thereof.

According to an embodiment of the invention polyvinyl acetate (PVA) may for example have a GPC average molecular weight in the range of 1,000 to 90,000, such as the range of 3,000 to 80,000 Mn including the range of 30,000 to 50,000.

According to an embodiment of the invention, the vinyl acetate-vinyl laurate copolymers, e.g. having a vinyl laurate content of 5 to 50% by weight, such as 10 to 45% by weight of the copolymer.

In an embodiment of the invention, said chewing gum comprising at least one high molecular weight elastomer in an amount of 0% to 14% by weight of said chewing gum, preferably 0.5% to 10% by weight of said chewing gum.

In an embodiment of the invention, the molecular weight of said at least one high molecular weight elastomer is from 50000 g/mol to 800000 g/mol Mn.

In an embodiment of the invention, said chewing gum comprising at least one low molecular weight elastomer is in an amount of 0% to 20% by weight of said chewing gum.

In an embodiment of the invention, the molecular weight of said at least one low molecular weight elastomer is from 1000 g/mol to 50000 g/mol Mn.

In an embodiment of the invention, said chewing gum comprises lubricants, anti-adherents and glidants such as metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

According to a preferred embodiment of the invention, the chewing gum comprises lubricants, anti-adherents and glidants in an amount as small as possible thereby avoiding reduced texture properties.

In an embodiment of the invention the chewing gum is free of lubricants, anti-adherents and glidants.

According to a preferred embodiment of the invention, the chewing gum is free of lubricants, anti-adherents and glidants, thereby obtaining as much texture-improvement as possible by means of the applied combination of synthetic and natural resins.

In an embodiment of the invention, the natural resins provide an improved and sticky texture of the chewing gum when applied in chewing gum formulation.

In an embodiment of the invention, said chewing gum is wax free.

According to an advantageous embodiment of the invention, a wax-free chewing gum formulation has been obtained having advantageous texture properties when the chewing gum formulation is moderated with respect to the balance between the synthetic and the natural resins.

In an embodiment of the invention, said chewing gum is fat free.

A fat-free chewing gum formulation benefits for example from improved healthiness.

In an embodiment of the invention, the chewing gum has a water content of less than 2.0%, preferably less than 1.5% by weight of the chewing gum.

In an embodiment of the invention, said chewing gum comprises filler in an amount of 0% to 50% by weight of the chewing gum.

In an embodiment of the invention, said chewing gum comprises synthetic resin in an amount of 1.5% to 35% by weight of the chewing gum.

According to an embodiment of the invention, a relatively high amount of natural resin, e.g. 20% by weight of the gum base, would typically result in a somewhat reduced use of synthetic resin. An example of such an application would be a ratio of 1-to-1, whereas reduced content of natural resin advantageously may result in an increased ratio.

In an embodiment of the invention, said chewing gum comprises emulsifiers and/or fats in an amount of 0.1% to 35% by weight of the chewing gum.

In an embodiment of the invention, said chewing gum comprises wax in an amount of 0.5 to 30% by weight of the chewing gum.

In an embodiment of the invention, at least a part of the flavoring agents has been teared into the chewing gum forming gum base granules or part of the gum base granules previous to compression.

In an embodiment of the invention, said chewing gum additives comprise active ingredients.

In an embodiment of the invention, at least a part of said active ingredients has been teared into the chewing gum or at least a part of the chewing gum previous to compression.

Moreover, the invention relates to a compressed chewing gum tablet comprising gum base according to any of the claims 1-24 in an amount of 10% to 90% by weight of the chewing gum tablet.

The invention also facilitates the providing of a compressed chewing gum tablet comprising a chewing gum center fully or partly encapsulated by a barrier layer, said gum center comprising a compression of gum base granules and chewing gum additives, said gum base granules having a moderated tackiness.

Gum base additives may, according to the invention, broadly refer to sweeteners, flavors, acids, colors, active ingredients, cooling agents, freeze-dried fruit, etc. Moreover, the applied ingredients may be encapsulated.

Moreover, according to the invention, it has been recognized that controlling of tackiness, preferably established by means of natural resins facilitates a more freely selected group of tablet shapes.

According to the invention, it is now possible to obtain a chewing gum tablet, made by means of compression of a gum base granulate and chewing gum additives, having an acceptable and improved immediate initial texture.

According to the invention, it is possible to obtain the desired texture by means of natural resins mixed into the gum base previous to the compression of gum base granulates.

It should be noted that although natural resins are preferred for the adjustment of the desired texture, synthetic resin may be added to the gum base or the chewing gum, if so desired.

Evidently, according to the invention, further additives may be added to the gum base, e.g. during mixing or after mixing.

Moreover, according to the invention, it has been recognized that the natural resin facilitates an advantageous overall flavor release when the compressed chewing gum tablet is chewed. This may partly be due to the fact that the initial chewing of the gum tablet results in an immediate release of flavor particles and at the same time that a part of the dissolved flavor particles reacts or become incorporated into the chewing gum base.

The last part of the flavor release results in prolonging of the overall flavor release time.

According to conventional chewing gum manufacturing several efforts have been made in making chewing gum less sticky.

Moreover, a further advantage of the chewing gum tablet according to the invention is that the tablet may be handled and temporarily stored prior to the final processing such as coating and the final packaging.

The upper limit of the desired tackiness is reached, when the gum base granules can no longer be processed by conventional compression techniques.

Generally, the above mentioned advantages may be summed up to be that stickiness may actually be obtained in chewing gums made by compression and not only by the traditional mixing methods.

Moreover, according to the invention, it has been recognized that the natural resin facilitates an advantageous overall flavor release when the compressed chewing gum tablet is chewed. This may partly be due to the fact that the initial chewing of the gum tablet results in an immediate release of distinct flavor particle and at the same time, that a part of the dissolved flavor particles reacts or become incorporated into the chewing gum base. On the other hand, the natural resins as provided and balanced with respect synthetic resins according to the invention has shown advantageous release properties compared to e.g. chewing gums comprising synthetic resins only.

When the moderated tackiness is obtained by means of at least one natural resin incorporated in at least a part of the gum base granules, a further advantageous embodiment of the invention has been obtained.

According to the invention, the "% by weight" of the chewing gum tablet refers to the un-coated chewing gum tablet.

When the compressed chewing gum tablet comprises 0.1% to 15% by weight of flavoring agents, preferably 0.8% to 5% by weight, a further advantageous embodiment of the invention has been obtained.

The amount of flavor depends heavily of the applied type of flavor and whether the flavor has been partly teared into the gum base or part of the gum base previous to the compression of the gum base granules and the chewing gum additives.

When the natural resins provide an improved and sticky texture of the tablet, a further advantageous embodiment of the invention has been obtained.

According to the invention, natural resins provide an improved and sticky texture of the final compressed tablet compared to traditional compressed chewing gum.

When the gum center comprises wax, a further advantageous embodiment of the invention has been obtained.

The desired moderated tackiness may in certain compositions be "tuned" by means of the wax content, which, when applied in an increased amount in the context of certain gum base compounds, may increase the tackiness of the final barrier-encapsulated composition.

When the gum center is free of wax, a further advantageous embodiment of the invention has been obtained.

According to an embodiment of the invention, adjustment of the desired initial tackiness may be performed without wax.

When the gum base granules comprise pre-mixed active ingredients, a controlled release of active ingredients may be obtained by means of at least a double active ingredients buffer, the first buffer comprising active ingredients blended into the final mix immediately prior to compression, the second buffer comprising active ingredients blended into the gum base prior to the blending of gum base and chewing gum base additives.

In this way, the balance between pre-mixed ingredients and normal compressed ingredients, a certain desired balance between early and late release of active ingredients may be obtained.

### Figures

The invention will be described in the following with reference to the figures in which
- fig. 1: illustrates a chewing gum tablet according to the invention,
- fig. 2a and 2b: illustrate flowcharts of two applicable alternative manufacturing methods according to examples of embodiments of the invention,
- fig. 3: illustrates the compression of a chewing gum according to one embodiment of the invention, and where
- fig. 4: illustrates the compression of a chewing gum according to another embodiment of the invention.

### Detailed description

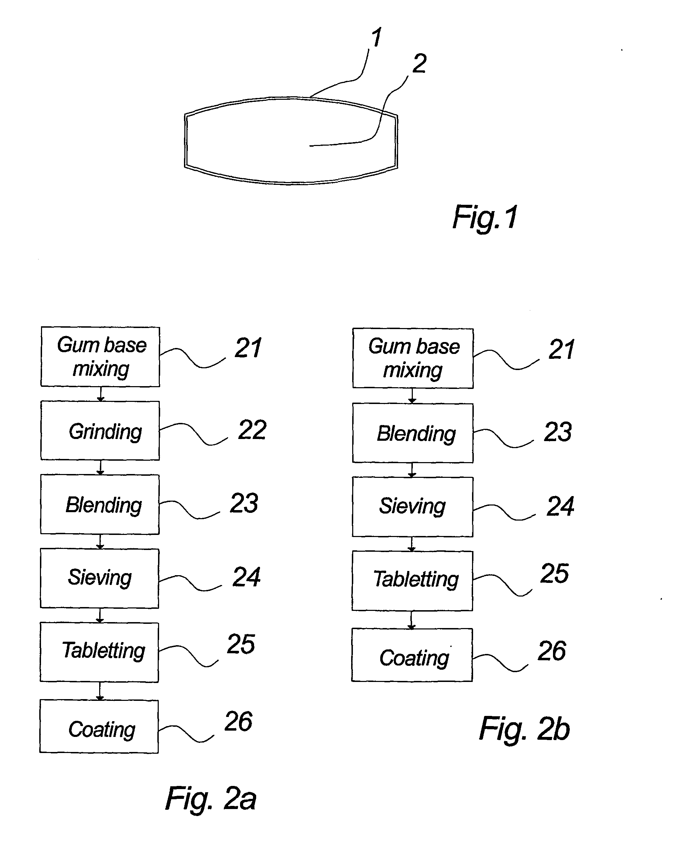

Fig. 1 illustrates a chewing gum tablet according to the invention.

The fig. 1 illustrates a chewing gum tablet made on the basis of compressed gum base granulates. The gum tablet comprises a barrier layer 1 encapsulating or partly encapsulating a gum base center 2.

The gum base granulates are made on the basis of a gum base. As used herein, the expression "gum base" refers in general to the water insoluble part of the chewing gum, which typically constitutes 10 to 90% by weight including the range of 15-50% by weight of the total chewing gum formulation. Chewing gum base formulations typically comprise one or more elastomeric compounds of synthetic or natural origin, at least two resinous compounds which, according to the invention is both of synthetic or natural origin, fillers, softening compounds and minor amounts of miscellaneous ingredients such as antioxidants and colorants, etc.

According to a preferred embodiment of the invention, the gum base should always comprise at least an amount of 5% by weight of natural resins and less than 40% by weight of the gum base and the synthetic resin should be present in an amount of 15% to 40% by weight of the gum base.

The composition of chewing gum base formulations mixed with chewing gum additives, as defined below can vary depending on the particular product to be prepared and on the desired masticatory and other sensory characteristics of the final product. However, typical ranges (weight%) of the above gum base components are: 5 to 50% by weight elastomeric compounds, 5 to 55% by weight resins, 0 to 50% by weight filler/texturiser, 5 to 35% by weight softener and 0 to 1% by weight of miscellaneous ingredients such as antioxidants, colorants, etc.

The barrier layer 1 may preferably be applied during or prior to the processing of the tablet.

The barrier layer, e.g. Mg Stearate, forms an outer barrier of the gum tablet.

Further layers may be applied to the tablet, such as traditional coatings.

Fig. 2a shows a typical flowchart, illustrating the major steps of one of several applicable manufacturing processes within the scope of the invention.

In step 21, a suitable gum base is prepared according to the prescriptions of the invention.

According to a preferred embodiment of the invention, the gum base is partly pre-mixed with a moderated amount of flavor and/or active ingredients.

The pre-mixing of flavors or active ingredients may e.g. be performed by means of conventional mixers, e.g. a Z-blade mixer, during no or preferably relatively little added heating and under atmospheric pressure. Preferably, the pre-mixing (also referred to a tearing) should be purely mechanically and should be performed sufficiently enough to result in a homogeneous blend of the flavor and/or active ingredients into the gum base.

Typical duration in time of mixing may be between few minutes op to e.g. 30 minutes. Evidently, according to the invention, other temperatures, pressures, duration in time and mixing methods may be applied for the purpose of mixing active ingredients and/or flavors into the gum base and thereby the gum base granulate applied for the subsequent compression.

In step 22, the provided gum base is grinding (by some referred to as granulated). The granulating may be performed by means of well-known techniques. One of those techniques implies an initial cooling of the gum base immediately prior to granulation. If the consistence of the gum base allows so, the provided gum base may be granulated at room temperature.

According to an advantageous embodiment of the invention, bulk-sweeteners may advantageously be applied as a grinding aid. Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

In step 23, the gum base granulate is blended with suitable chewing gum additives.

In the present context, chewing gum additives include bulk sweeteners, high-intensity sweeteners, flavoring agents, softeners, emulsifiers, coloring agents, binding agents, acidulants, fillers, antioxidants and other components such as pharmaceutically or biologically active substances, that confer desired properties to the finished chewing gum product.

Examples of suitable sweeteners are listed below.

Suitable bulk sweeteners include e.g. both sugar and non-sugar components. Bulk sweeteners typically constitute from 5 to 95% by weight of the chewing gum, more typically 20 to 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to, sucralose, aspartame, salts of acesulfame, alitame, saccharin and its salts, neotam, cyclamic acid and its salts, glycyrrhizin, dihydrochalcones, thaumatin, monellin, sterioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve desired release characteristics.

Usage level of the artificial sweetener will vary considerably depending e.g. on factors such as potency of the sweetener, rate of release, desired sweetness of the product, level and type of flavor used and cost considerations. Thus, the active level of artificial sweetener may vary from 0.02 to 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low-calorie gum is desired, a low-calorie bulking agent can be used. Examples of low-calorie bulking agents include polydextrose, Raftilose, Raftilin, Inuline, fructooligosaccharides (NutraFlora^{®}), palatinose oligosaccharided; guar gum hydrolysates (e.g. Sun Fiber^{®}) or indigestible dextrins (e.g. Fibersol^{®}). However, other low-calorie bulking agents can be used.

Further chewing gum additives, which may be included in the chewing gum mixture processed in the present process include surfactants and/or solubilisers, especially when pharmaceutically, cosmetically or biologically active ingredients are present. As examples of types of surfactants to be used as solubilisers in a chewing gum composition according to the invention reference is made to H.P. Fiedler, Lexikon der Hilfstoffe für Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllactylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. The expression "solubiliser" is used in the present text to describe both possibilities, the solubiliser used must be suitable for use in food and/or medicine.

In the presence of an active ingredient the chewing gum may preferably also comprise a carrier known in the art.

One significant advantage of the present process is that the temperature throughout the entire operation can be kept at a relatively low level such as it will be described in the following. This is an advantageous feature with regard to preserving the aroma of added flavoring components, which may be prone to deterioration at higher temperatures. Aroma agents and flavoring agents which are useful in a chewing gum produced by the present process are e.g. natural and synthetic flavorings (including natural flavorings) in the form of freeze-dried natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

In one preferred embodiment, the flavor is one or more natural flavoring agent(s) which is/are freeze-dried, preferably in the form of a powder, slices or pieces or combinations thereof. The particle size of such agents may be less than 3 mm, such as less than 2 mm, more preferred less than 1 mm, calculated as the longest dimension of the particle. The natural flavoring agent may also be in a form where the particle size is from 3 µm to 2 mm, such as from 4 µm to 1 mm. Preferred natural flavoring agents include seeds from a fruit e.g. from strawberry, blackberry and raspberry.

Various synthetic flavors, such as mixed fruit flavor may also be used according to the present invention. As indicated above, the aroma agent may be used in quantities smaller than those conventionally used. The aroma agents and/or flavors may be used in an amount of 0.01 to 30% by weight of the final product depending on the desired intensity of the aroma and/or flavor used. Preferably, the content of aroma/flavor is in the range of 0.2 to 3% by weight of the total composition.

According to the invention, encapsulated flavors or active ingredients, may be added to the final blend, e.g. in step 23 of fig. 2, prior to compression.

Different methods of encapsulating flavors or active ingredients, which may both refer to flavors or active ingredients mixed into the gum base and flavors or active ingredients compressed into the chewing gum may e.g. include Spray drying, Spray cooling, Film coating, Coascervation, Double emulsion method (Extrusion technology) or Prilling.

Materials to be used for the above-mentioned encapsulation methods may e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Active ingredients may be added to chewing gum. Preferably, these ingredients should be added subsequent to any significant heating or mixing. In other words, the active ingredients, should preferably be added immediately prior to the compression of the final tablet.

Referring to the process illustrated in fig. 2, the adding of active ingredients may be cautiously blended with pre-mixed gum base granulates and further desired additives, immediately prior to the final compression of the tablet.

Examples of suitable active ingredients are listed below.

In one embodiment of the invention, the chewing gum comprises a pharmaceutically, cosmetically or biologically active substance. Examples of such active substances, a comprehensive list of which is found e.g. in WO 00/25598, which is incorporated herein by reference, include drugs, dietary supplements, antiseptic agents, pH-adjusting agents, anti-smoking agents and substances for the care or treatment of the oral cavity and the teeth such as hydrogen peroxide and compounds capable of releasing urea during chewing. Examples of useful active substances in the form of antiseptics include salts and derivatives of guanidine and biguanidine (for instance chlorhexidine diacetate) and the following types of substances with limited water-solubility: quaternary ammonium compounds (e.g. ceramine, chloroxylenol, crystal violet, chloramine), aldehydes (e.g. paraformaldehyde), derivatives of dequaline, polynoxyline, phenols (e.g. thymol, p-chlorophenol, cresol), hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. also Martindale, The Extra Pharmacopoeia, 28th edition, page 547-578; metal salts, complexes and compounds with limited water-solubility, such as aluminum salts, (for instance aluminum potassium sulphate AlK(SO₄)₂,12H₂O) and salts, complexes and compounds of boron, barium, strontium, iron, calcium, zinc, (zinc acetate, zinc chloride, zinc gluconate), copper (copper chloride, copper sulphate), lead, silver, magnesium, sodium, potassium, lithium, molybdenum, vanadium should be included; other compositions for the care of mouth and teeth: for instance; salts, complexes and compounds containing fluorine (such as sodium fluoride, sodium monofluorophosphate, aminofluorides, stannous fluoride), phosphates, carbonates and selenium. Further active substances can be found in J. Dent.Res. Vol. 28 No. 2, page 160-171,1949.

Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

Active ingredients may comprise the below-mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chlorhexidine, Ecabet-sodium, Haloperidol, Allopurinol, Colchinine, Theophylline, Propanolol, Prednisolone, Prednisone, Fluoride, Urea, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine.

The invention is suitable for increased or accelerated release of active agents selected among the group of dietary supplements, oral and dental compositions, antiseptic agents, pH-adjusting agents, anti-smoking agents, sweeteners, flavorings, aroma agents or drugs. Some of those will be described below.

The active agents to be used in connection with the present invention may be any substance desired to be released from the chewing gum. The active agents, for which a controlled and/or accelerated rate of release is desired, are primarily substances with a limited water-solubility, typically below 10 g/100 ml inclusive of substances which are totally water-insoluble. Examples are medicines, dietary supplements, oral compositions, anti-smoking agents, highly potent sweeteners, pH-adjusting agents, flavorings, etc.

Other active ingredients are, for instance, paracetamol, benzocaine, cinnarizine, menthol, carvone, caffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, Folic acid, niacine, biotine, poorly-soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutrients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AlK(SO₄)₂,12H₂O) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent.Res. Vol. 28 No. 2, page 160-171, 1949, wherein a wide range of tested compounds is mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

In a further embodiment of the invention, the sucrose fatty acid esters may also be utilized for increased release of sweeteners including for instance the so-called highly potent sweeteners, such as for instance saccharin, cyclamate, aspartame, thaumatin, dihydrocalcones, stevioside, glycyrrhizin or salts or compounds thereof. For increased released of sweetener, the sucrose fatty acids preferably have a content of palmitate of at least 40% such as at least 50%.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov.85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH.RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen^{®}, Sildenafil citrate and derivatives thereof.

Dental products include Carbamide, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folic acid, niacin, Pantothensyre, biotine, C, D, E, K. Minerals include Calcium, phosphor, magnesium, iron, Zink, Cupper, Iod, Mangan, Crom, Selene, Molybden. Other active ingredients include: Q10^{®}, enzymes. Natural drugs including Ginkgo Biloba, ginger, and fish oil.

The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid. In a preferred embodiment the invention relates to the release of Nicotine and its salts.

The above-mentioned active ingredients and/or flavors may be pre-mixed into the gum base.

When the gum base granules comprise pre-mixed active ingredients, a controlled release of active ingredients may be obtained by means of at least a double active ingredients buffer, the first buffer comprising active ingredients blended into the final mix immediately prior to compression, the second buffer comprising active ingredients blended into the gum base prior to the blending of gum base and gum base additives.

Generally, release of flavor and/or active ingredients may be adjusted by adjustment of the balance between pre-mixed ingredients and the chewing gum additives added prior to compression.

In step 24, the resulting blend is prepared for tableting by means of sieving.

The degree of sieving depends primarily of how the gum base granulate(s) "reacts" when chewing gum additives are blended together.

If suitable, an initial pre-forming of the granulates are supplemented by spraying the barrier layer at the surface or at least a part of the surface of the pre-formed granulates. This technique and variants thereof may be referred to as an explicit barrier layer depositing.

However, preferably, the barrier layer is established in a more implicit way. This technique and variants thereof may be referred to as implicit barrier layer depositing. This technique implies that the barrier layer compound is sprayed or deposited initially on the contacting surfaces of the pressing tools of a compression machine.

An applicable technique suitable for implicit-barrier layer depositing is disclosed in US patent 5,643,630.

In step 25, the grinded blend is applied to the pressing tools of a tableting machine and compressed into chewing gum tablets.

The applied barrier layer may comprise of e.g. lubricants, anti-adherents and glidants.

Magnesium stearate may e.g. be applied as a pulverized parting compound.

The barrier layer may be added to the final tablet for example by depositing dosed quantities of pulverized lubricants and parting compounds on the material contacting surfaces of pressing tools of tableting machines.

The barrier layer may be established by means of for example metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, furned silica, powdered hydrogenated cottonseed oils, hydrogenated vegetable oils, hydrogenated soya oil and mixtures thereof.

In step 26, which is optional, but preferred, the tableted chewing gum is provided with a suitable coating.

In accordance with an embodiment the invention, the chewing gum element comprises 5% to 98% by weight of the complete weight of the coated chewing gum. In the present context, a suitable outer coating is any coating that results in an extended storage stability of the compressed chewing gum products as defined above, relative to a chewing gum of the same composition that is not coated. Thus, suitable coating types include hard coatings, film coatings and soft coatings of any composition including those currently used in coating of chewing gum, pharmaceutical products and confectioneries.

According to a preferred embodiment of the invention, film coating is applied to the compressed chewing gum tablet.

One presently preferred outer coating type is a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the gum centers for various reasons. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc. In the present context, the sugar coating may contain further functional or active compounds including flavor compounds, pharmaceutically active compounds and/or polymer degrading substances.

In the production of chewing gum it may, however, be preferred to replace the cariogenic sugar compounds in the coating by other, preferably crystallizable, sweetening compounds that do not have a cariogenic effect. In the art such coating is generally referred to as sugarless or sugar-free coatings. Presently preferred non-cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process, as it will be described in details in the following, a syrup containing crystallizable sugar and/or polyol is applied onto the gum centers and the water it contains is evaporated off by blowing with warm, dry air. This cycle must be repeated several times, typically 10 to 80 times, in order to reach the swelling required. The term "swelling" refers to the increase in weight of the products, as considered at the end of the coating operation by comparison with the beginning, and in relation to the final weight of the coated products. In accordance with the present invention, the coating layer constitutes 1 to 75% by weight of the finished chewing gum element, such as 10 to 60% by weight, including 15 to 50% by weight.

In further useful embodiments of the invention, the outer coating of the chewing gum element is an element that is subjected to a film coating process and which therefore comprises one or more film-forming polymeric agents and optionally one or more auxiliary compounds, e.g. plasticizers, pigments and opacifiers. A film coating is a thin polymer-based coating applied to a chewing gum center of any of the above forms. The thickness of such a coating is usually between 20 and 100 µm. Generally, the film coating is obtained by passing the chewing gum centers through a spray zone with atomized droplets of the coating materials in a suitable aqueous or organic solvent vehicle, after which the material adhering to the gum centers is dried before the next portion of coating is received. This cycle is repeated until the coating is complete.

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the chewing gum elements comprise a plasticizing agent having the capacity to alter the physical properties of a polymer to render it more useful in performing its function as a film-forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity. In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer(s) and plasticizing agent(s) for the outer coating of the present chewing gum element is made with due consideration for achieving the best possible barrier properties of the coating in respect of dissolution and diffusion across the film of moisture and gasses.

The film coating of the chewing gum elements may also contain one or more colorants or opacifiers. In addition to providing a desired color hue, such agents may contribute to protecting the compressed gum base against pre-chewing reactions, in particular by forming a barrier against moisture and gasses. Suitable colorants/pacifiers include organic dyes and their lakes, inorganic coloring agents, e.g. titanium oxide and natural colors such as e.g. β-carotene.

Additionally, film coatings may contain one or several auxiliary substances such as flavors and waxes or saccharide compounds such as polydextrose, dextrins including maltodextrin, lactose, modified starch, a protein such as gelatine or zein, a vegetable gum and any combination thereof.

It is also an aspect of the present invention that the outer coating of the chewing gum element can contain one or more pharmaceutically or cosmetically components including those mentioned hereinbefore.

Accordingly, in further embodiments of the invention, the above hard-coated or film-coated chewing gum element is an element where the outer coating comprises at least one additive component selected from a binding agent, a moisture absorbing component, a film forming agent, a dispersing agent, an anti-sticking component, a bulking agent, a flavoring agent, a coloring agent, a pharmaceutically or cosmetically active component, a lipid component, a wax component, a sugar and an acid. If it is desired to defer the effect of any of these additive components in the outer coating until mastication of the chewing gum, such components may, in accordance with the invention be encapsulated using any conventional encapsulation agent such as e.g. a protein including gelatine and soy protein, a cellulose derivative including any of those mentioned above, a starch derivative, edible synthetic polymers and lipid substances, the latter optionally in the form of liposome encapsulation.

In other embodiments of the invention, the chewing gum element is provided with an outer coating in the form generally described in the art as a soft coating. Such soft coatings are applied using conventional methods and may advantageously consist of a mixture of a sugar or any of the above non-cariogenic, sugar-less sweetening compounds, and a starch hydrolysate.

Again, it should be noted that the above-described coating is optional or that it may be postponed until it fits into the last part of the manufacturing process due to the fact that the applied barrier layer is also acting as a complete or at least a partial barrier to transfer of humidity from the environment into the tablet.

Fig. 2b illustrates a further embodiment of the invention.
Basically, the illustrated process corresponds to the process illustrated in fig. 2a, although some important process steps have been modified, namely step 21 and the omission of step 22.

When applying a high-speed mixing process, e.g. by means of a Lipp-mixer, granules of relatively small size may be obtained, thereby facilitating the possibility of omitting the step of milling in step 22. Evidently, such omission of a process step requires a relatively high quality of the output product of the high-speed mixer in step 21, and different quality measures may be established.

An alternative and very advantageous method of preparing a resin-comprising chewing gum, i.e. by means of so-called premixing of flavors into the gum base polymers, is described in PCT/DK02/00462, hereby incorporated by reference.

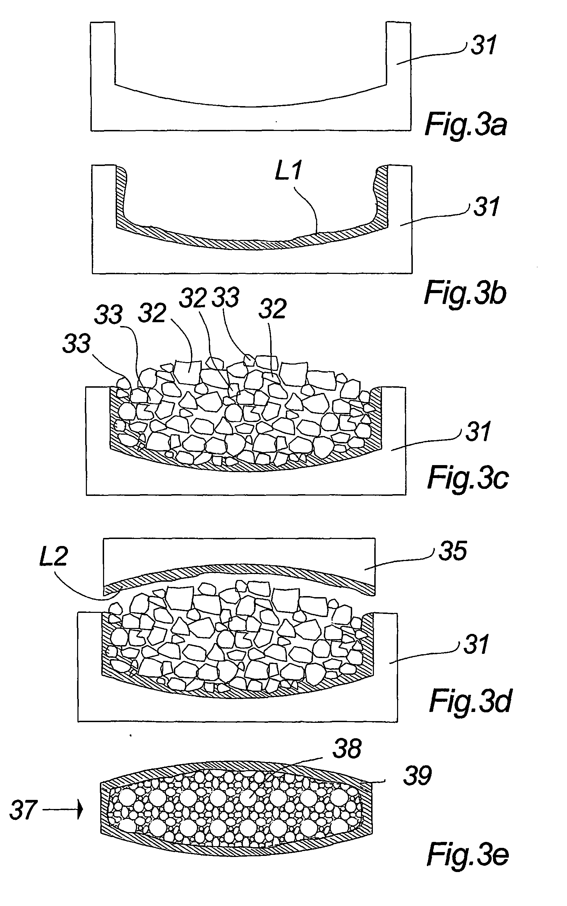

Fig. 3a to fig. 3e illustrate some important features of one embodiment of the invention.

The figures 3a to 3e illustrate a possible application of the already described 25 of fig. 2.

The below-described barrier depositing method has been referred to as implicit barrier layer depositing. As mentioned above, this technique implies that the barrier layer compound is sprayed or deposited initially on the contacting surfaces of the pressing tools of a compression machine. An applicable technique suitable for implicit-barrier layer depositing is disclosed in US patent 5,643,630.

In fig. 3a a first part of a pressing tool 31 has been provided.

In fig. 3b, dosed quantities of pulverized lubricants of parting compounds have been deposited on the first part 31 of the pressing tool. The deposited layer L1 constitutes a first part of the final barrier layer of the final chewing gum.

In fig. 3c, a blend, as provided in step 23 and 24, is injected into the pressing tool 31. The blend comprises gum base granules 32 and gum base additives 33 such as additional sweeteners, additional flavors, etc. Suitable chewing gum additives have been disclosed above.

In fig. 3d, a second part of a pressing tool 35 has been provided with a second part of the final barrier layer L2.

In fig. 3e, the pressing tools 31 and 35 has been pressed together, thereby invoking a compression of the gum base blending of gum base granules 32 and further chewing gum additives 33. Basically, the resulting chewing gum tablet 37 comprises a chewing gum center 38 comprising a compression of the gum base granules 32 and the gum base additives 33.

A fmal barrier layer 39 is formed as a combining of barrier layer L1 and barrier layer L2.

According to the invention, the - evidently moderated - tackiness of the gum base granules 32 or at least a part of the granules is provided by means of e.g. natural resins incorporated in the gum base granulate.

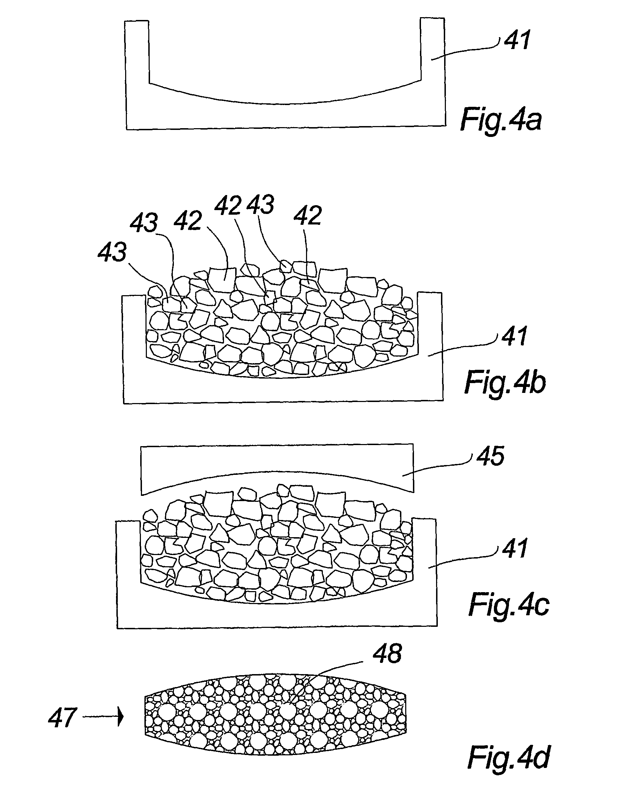

Fig. 4a to 4d illustrate a further embodiment of the invention.

In fig. 4a a first part of a pressing tool 41 has been provided.

In fig. 4b, a blend, e.g. as provided according to the processes illustrated in fig. 2a and 2b is injected into the pressing tool 41. The blend comprises gum base granules 42 and gum base additives 43 such as additional sweeteners, additional flavors, etc. Suitable chewing gum additives have been disclosed above.

In fig. 4c, a second part of a pressing tool 45 has been provided.

In fig. 4d, the pressing tools 41 and 45 have been pressed together, thereby invoking a compression of the gum base blending of gum base granules 42 and further chewing gum additives 43. Basically, the resulting chewing gum tablet 47 comprises a chewing gum center 48 comprising a compression of the gum base granules 42 and the gum base additives 43.

The fmal tablets of e.g. fig. 3e and 4d may moreover be provided with a coating.

Compared to conventionally mixed chewing gum, the compression of a gum base granulate together with chewing gum additives is a relatively lenient gathering of the final chewing gum, at least with respect to temperature. However, the omission of the thoroughly tearing of the granulate together with the desired additives will, according to conventional chewing gum, result in a risk of crumbling and disintegration especially during the initial chew.

According to the invention, the provided chewing gum featuring tacky granules may counteract the initial-chew invoked disintegration to such a degree that the chewing gum remains non-crumbling until the granules are finally mixed during the chewing of the chewing gum.

Three different examples of compressed chewing gum were prepared according to the invention according to the process of fig. 2a. One example was prepared completely without natural resin.

The below numbers refer to% by weight of the complete final chewing gum. The provided chewing gums were not provided with an added coating.

| | ex. 1 | ex.2 | ex.3 | ex.4 |
|---|---|---|---|---|
| Gum base | 37 | 32 | 35 | 32 |
| Sorbitol | 58 | 61 | 60 | 61 |
| Flavor | 4 | 7 | 5 | 7 |
| APM | 0.15 | 0.15 | 0.15 | 0.15 |
| ACK | 0.15 | 0.15 | 0.15 | 0.15 |
| (nat. resin) | (5.1) | (2.0) | (4) | (-) |

The last row refers to the amount of natural resin of the complete chewing gum.

The provided chewing gum was tested by a sensory panel of 8 persons.

Example 1 and 3 were deemed to have an impressing initial chew and moreover an impressing flavor release. Deemed OK.

Example 2 was deemed to be OK, but giving a feeling of a little more vulnerable initial chew.

Example 4 had an almost liquid consistence, and the obtained chewing gum was deemed not OK.

Further examples of embodiments of the invention will be described below.

### Example 5

### Preparation of gum bases

The gum bases were composed as described in the following table, in which GB-2 and GB-3 are provided as comparative prior art examples:

| Raw Material | GB-1 | GB-2 | GB-3 | GB-4 | GB-5 |
|---|---|---|---|---|---|
| Elastomer | 6.5 | 14.0 | 24.0 | 16.5 | 17.5 |
| Natural resin | 20.0 | 0.0 | 0.0 | 10.0 | 5.0 |
| PVA | 23.0 | 30.0 | 40.0 | 27.8 | 27.8 |
| Filler | 27.0 | 28.0 | 0.0 | 20.3 | 24.3 |
| Emulsifier | 9.0 | 9.0 | 11.0 | 8.0 | 8.0 |
| Fat | 0.0 | 19.0 | 25.0 | 17.4 | 17.4 |
| Wax | 14.5 | 0.0 | 0.0 | 0.0 | 0.0 |

The gum bases are prepared as follows:

The elastomers are added to a mixing kettle provided with mixing means like e.g. horizontally placed Z-shaped arms. The elastomers are broken into small pieces and softened with mechanical action on the kettle.

The natural resins are slowly added to the elastomers and when the mixture becomes homogeneous the PVA is added. During the phase of mixing the elastomers with the natural resins and the PVA the filler is admixed successively in portions capable of being absorbed into the mixture. The softening system comprising emulsifiers, fats and/or wax is slowly added into the mixture and mixing is continued until a homogenous gum base is obtained. Mixing time is typically in the range of 30 minutes to 4 hours depending of the composition and mixing technology. The mixing temperature will typically be in the range from 50° C to 120° C.

The mixture is then discharged into the pan or pelletizied and allowed to cool to room temperature from the discharged temperature of 50-120° C.

The compressed chewing gum formulation is as follows.

| Raw Material | Ingredient (%) |
|---|---|
| Gum Base | 35 |
| Sorbitol | 60 |
| Flavor | 5 |
| APM | 0.15 |
| ACK | 015 |

The resulting compressed chewing gums prepared according to the process of fig. 2b were evaluated both with respect to texture properties in a sensory test and with respect to the high-speed mixing performance:

| Gum Base formulation | Sensory evaluation | High-speed mixing performance |
|---|---|---|
| GB-1 | Excellent | Acceptable |
| GB-2 | Not acceptable | Excellent |
| GB-3 | Not acceptable | Excellent |
| GB-4 | Good | Acceptable |
| GB-5 | Acceptable | Good |

The sensory evaluation of the texture was made with reference to a conventional chewing gum, which is ranked, as excellent. And the high-speed mixing performance was made with reference to whether the granules obtained from the high-speed mixer did not need subsequently milling before entering the compression process which was ranked as excellent.

Mixtures exceeding 50% of natural resins were not acceptable for the high-speed mixer due to sticking and lumps creation during the process.

## Claims

1. Compressed chewing gum comprising
elastomer in the amount of up to 32% by weight, preferably 5% to 25% by weight of the chewing gum,
resin in the amount of 1.5% to 55% by weight, preferably 4% to 30% by weight of the chewing gum
and chewing gum additives,
wherein said resin comprises
- natural resin in the amount of 0.5% to 35% by weight, preferably 4% to 30% by weight of the chewing gum,
- synthetic resin in the amount of 1% to 35% by weight, preferably 4% to 30% by weight of the chewing gum,
the ratio between the synthetic resin and the natural resin being from 0.5 to 7, preferably from 0.9 to 6.0, and wherein said compressed chewing gum comprises flavor.

2. Compressed chewing gum according to claim 1,
wherein the ratio between the synthetic resin and the natural resin is from 0.9 to 2.0, preferably from 0.9 to 1.5.

3. Compressed chewing gum according to claim 1 or 2,
wherein said chewing gum additives comprise sweeteners in the amount of 5 to 95% by weight of the chewing gum, more typically 20 to 80% by weight such as 30 to 60% by weight of the chewing gum.

4. Compressed chewing gum according to any of the claims 1-3,
wherein the compressed chewing gum tablet comprises 0.1% to 15% by weight of flavoring agents, preferably 0.8% to 5% by weight.

5. Compressed chewing gum according to any of the claims 1-4,
wherein said natural resin comprises one or more different natural resins.

6. Compressed chewing gum according to any of the claims 1-5,
wherein said synthetic resin comprises one or more different synthetic resins.

7. Compressed chewing gum according to any of the claims 1-6,
wherein said natural resin comprises rosin esters

8. Compressed chewing gum according to any of the claims 1-7,
wherein said natural resin comprises terpene resins, e.g. derived from alpha-pinene, beta-pinene, and/or d-limonene, natural terpene resins, glycerol esters of gum rosins, tall oil rosins, wood rosins or other derivatives thereof such as glycerol esters of partially hydrogenated rosins, glycerol esters of polymerized rosins, glycerol esters of partially dimerised rosins, pentaerythritol esters of partially hydrogenated rosins, methyl esters of rosins, partially hydrogenated methyl esters of rosins or pentaerythritol esters of rosins and combinations thereof.

9. Compressed chewing gum according to any of the claims 1-8,
wherein said synthetic resin comprises polyvinyl acetate, vinyl acetate-vinyl laurate copolymers and mixtures thereof.

10. Compressed chewing gum according to any of the claims 1-9,
wherein said chewing gum comprising at least one high molecular weight elastomer in an amount of 0.5% to 14% by weight of said chewing gum.

11. Compressed chewing gum according to any of the claims 1-10,
wherein the molecular weight of said at least one high molecular weight elastomer is from 50000 g/mol to 800000 g/mol Mn.

12. Compressed chewing gum according to any of the claims 1-11,
wherein said chewing gum comprising at least one low molecular weight elastomer is in an amount of 0% to 20% by weight of said chewing gum.

13. Compressed chewing gum according to any of the claims 1-12,
wherein the molecular weight of said at least one low molecular weight elastomer is from 1000 g/mol to 50000 g/mol Mn.

14. Compressed chewing gum according to any of the claims 1-13,
wherein said chewing gum comprises lubricants, anti-adherents and glidants such as metallic stearates, hydrogenated vegetable oils, partially hydrogenated vegetable oils, polyethylene glycols, polyoxyethylene monostearates, animal fats, silicates, silicates dioxide, talc, magnesium stearates, calcium stearates, fumed silica, powdered hydrogenated cottonseed oils, hydrogenated vegetable oils, hydrogenated soya oil and mixtures thereof.

15. Compressed chewing gum according to any of the claims 1-14,
wherein the chewing gum is free of lubricants, anti-adherents and glidants.

16. Compressed chewing gum according to any of the claims 1-15,
wherein the natural resins provide an improved and sticky texture of the chewing gum when applied in chewing gum formulation.

17. Compressed chewing gum according to any of the claims 1-16,
wherein said chewing gum is wax free.

18. Compressed chewing gum according to any of the claims 1-17,
wherein said chewing gum is fat free.

19. Compressed chewing gum according to any of the claims 1-18,
wherein the chewing gum has a water content of less than 2.0%, preferably less than 1.5% by weight of the chewing gum.

20. Compressed chewing gum according to any of the claims 1-19,
wherein said chewing gum comprises filler in an amount of 0% to 50% by weight of the chewing gum.

21. Compressed chewing gum according to any of the claims 1-20,
wherein said chewing gum comprises synthetic resin in an amount of 1.5% to 35% by weight of the chewing gum.

22. Compressed chewing gum according to any of the claims 1-21,
wherein said chewing gum comprises emulsifiers and/or fats in an amount of 1% to 45% by weight of the chewing gum.

23. Compressed chewing gum according to any of the claims 1-22,
wherein said chewing gum comprises wax in an amount of 0.5 to 30% by weight of the chewing gum.

24. Compressed chewing gum according to any of the claims 1-23,
wherein at least a part of the flavoring agents have been teared into the chewing gum forming granules or at least a part of the chewing gum forming granules previous to compression.

25. Compressed chewing gum according to any of the claims 1-24,
wherein said chewing gum additives comprise active ingredients.

26. Compressed chewing gum according to any of the claims 1-25,
wherein at least a part of said active ingredients has been teared into the chewing gum forming granules or at least a part of the chewing gum forming granules previous to compression.

27. Compressed chewing gum according to any of the claims 1-26, wherein the chewing gum has been coated.

## Patentansprüche

1. Komprimierter Kaugummi, umfassend
Elastomer in einer Menge von bis zu 32 Gew.-%, bevorzugt 5 bis 25 Gew.-% des Kaugummis,
Harz in einer Menge von 1,5 bis 55 Gew.-%, bevorzugt 4 bis 30 Gew.-% des Kaugummis,
und Kaugummi-Additive,
wobei das Harz umfasst
- natürliches Harz in einer Menge von 0,5 bis 35 Gew.-%, bevorzugt 4 bis 30 Gew.-% des Kaugummis,
- synthetisches Harz in einer Menge von 1 bis 35 Gew.-%, bevorzugt 4 bis 30 Gew.-% des Kaugummis,
wobei das Verhältnis zwischen dem synthetischen Harz und dem natürlichen Harz 0,5 bis 7, bevorzugt 0,9 bis 6,0 beträgt und wobei der komprimierte Kaugummi Geschmack umfasst.

2. Komprimierter Kaugummi nach Anspruch 1,
bei dem das Verhältnis zwischen dem synthetischen Harz und dem natürlichen Harz 0,9 bis 2,0, bevorzugt 0,9 bis 1,5 beträgt.

3. Komprimierter Kaugummi nach Anspruch 1 oder 2,
bei dem die Kaugummi-Additive Süßungsmittel in einer Menge von 5 bis 95 Gew.-% des Kaugummis, typischer 20 bis 80 Gew.-%, wie 30 bis 60 Gew.-% des Kaugummis umfassen.

4. Komprimierter Kaugummi nach irgendeinem der Ansprüche 1-3,
bei dem die komprimierte Kaugummitablette 0,1 bis 15 Gew.-% an Geschmacksstoffen, bevorzugt 0,8 bis 5 Gew.-% umfasst.

5. Komprimierter Kaugummi nach irgendeinem der Ansprüche 1-4,
bei dem das natürliche Harz ein oder mehrere verschiedene natürliche Harze umfasst.

6. Komprimierter Kaugummi nach irgendeinem der Ansprüche 1-5,
bei dem das synthetische Harz ein oder mehrere verschiedene synthetische Harze umfasst.

7. Komprimierter Kaugummi nach irgendeinem der Ansprüche 1-6,
bei dem das natürliche Harz Kolophoniumester umfasst.

8. Komprimierter Kaugummi nach irgendeinem der Ansprüche 1-7,
bei dem das natürliche Harz Terpenharze, z.B. von alpha-Pinen, beta-Pinen und/oder d-Limonen, natürliche Terpenharze, Glycerolester von Kolophoniumgummis, Tallölkolophoniumharze, Holzkolophoniumharze oder andere Derivate derselben, wie Glycerolester von partiell hydrierten Kolophoniumharzen, Glycerolester von polymerisierten Kolophoniumharzen, Glycerolester von partiell dimerisierten Kolophoniumharzen, Pentaerythritester von partiell hydrierten Kolophoniumharzen, Methylester von Kolophoniumharzen, partiell hydrierte Methylester von Kolophoniumharzen oder Pentaerythritester von Kolophoniumharzen und deren Kombinationen umfasst.

9. Komprimierter Kaugummi nach irgendeinem der Ansprüche 1-8,
bei dem das synthetische Harz Polyvinylacetat, Vinylacetat-Vinyllaurat-Copolymere und deren Mischungen umfasst.

10. Komprimierter Kaugummi nach irgendeinem der Ansprüche 1-9,
bei dem der Kaugummi mindestens ein Elastomer mit hohem Molekulargewicht in einer Menge von 0,5 bis 14 Gew.-% des Kaugummis umfasst.

11. Komprimierter Kaugummi nach irgendeinem der Ansprüche 1-10,
bei dem das Molekulargewicht des mindestens einen Elastomers mit hohem Molekulargewicht 50000 g/Mol bis 800000 g/Mol Mn beträgt.

12. Komprimierter Kaugummi nach irgendeinem der Ansprüche 1-11,
bei dem der Kaugummi, der mindestens ein Elastomer mit niedrigem Molekulargewicht umfasst, in einer Menge von 0 bis 20 Gew.-% des Kaugummis vorliegt.

13. Komprimierter Kaugummi nach irgendeinem der Ansprüche 1-12,
bei dem das Molekulargewicht des mindestens einen Elastomers mit niedrigem Molekulargewicht 1000 g/Mol bis 50.000 g/Mol Mn beträgt.

14. Komprimierter Kaugummi nach irgendeinem der Ansprüche 1-13,
bei dem der Kaugummi Schmiermittel, Antihaftmittel und Gleitmittel umfasst, wie metallische Stearate, hydrierte Pflanzenöle, partiell hydrierte Pflanzenöle, Polyethylenglycole, Polyoxyethylenmonostearate, tierische Fette, Silicate, Silicatdioxide, Talkum, Magnesiumstearate, Calciumstearate, Kieselpuder, pulverförmige hydrierte Baumwollsamenöle, hydrierte Pflanzenöle, hydriertes Sojaöl und deren Mischungen.

15. Komprimierter Kaugummi nach irgendeinem der Ansprüche 1-14,
bei dem der Kaugummi frei von Schmiermitteln, Antihaftmitteln und Gleitmitteln ist.

16. Komprimierter Kaugummi nach irgendeinem der Ansprüche 1-15,
bei dem die natürlichen Harze für eine verbesserte und klebrige Struktur des Kaugummis sorgen, wenn sie in der Kaugummiformulierung verwendet werden.

17. Komprimierter Kaugummi nach irgendeinem der Ansprüche 1-15,
bei dem der Kaugummi wachsfrei ist.

18. Komprimierter Kaugummi nach irgendeinem der Ansprüche 1-17,
bei dem der Kaugummi fettfrei ist.

19. Komprimierter Kaugummi nach irgendeinem der Ansprüche 1-18,
bei dem der Kaugummi einen Wassergehalt von weniger als 2,0, bevorzugt weniger als 1,5 Gew.-% des Kaugummis aufweist.

20. Komprimierter Kaugummi nach irgendeinem der Ansprüche 1-19,
bei dem der Kaugummi Füllstoff in einer Menge von 0 bis 50 Gew.-% des Kaugummis umfasst.

21. Komprimierter Kaugummi nach irgendeinem der Ansprüche 1-20,
bei dem der Kaugummi synthetisches Harz in einer Menge von 1,5 bis 35 Gew.-% des Kaugummis umfasst.

22. Komprimierter Kaugummi nach irgendeinem der Ansprüche 1-21,
bei dem der Kaugummi Emulgatoren und/oder Fette in einer Menge von 1 bis 45 Gew.-% des Kaugummis umfasst.

23. Komprimierter Kaugummi nach irgendeinem der Ansprüche 1-22,
bei dem der Kaugummi Wachs in einer Menge von 0,5 bis 30 Gew.-% des Kaugummis umfasst.

24. Komprimierter Kaugummi nach irgendeinem der Ansprüche 1-23,
bei dem zumindest ein Teil der Geschmacksstoffe vor der Kompression in die Kaugummi-bildenden Granalien oder zumindest einen Teil der Kaugummi-bildenden Granalien gerissen worden

25. Komprimierter Kaugummi nach irgendeinem der Ansprüche 1-24,
bei dem die Kaugummi-Additive aktive Bestandteile umfassen.

26. Komprimierter Kaugummi nach irgendeinem der Ansprüche 1-25,
bei dem zumindest ein Teil der aktiven Bestandteile vor der Kompression in die Kaugummi-bildenden Granalien oder zumindest ein Teil der Kaugummi-bildenden Granalien gerissen worden

27. Komprimierter Kaugummi nach irgendeinem der Ansprüche 1-26, bei dem der Kaugummi beschichtet worden ist.

## Revendications

1. Gomme à mâcher comprimée comprenant
un élastomère en une quantité allant jusqu'à 32 % en poids, de préférence de 5 % à 25 % en poids de la gomme à mâcher, une résine en une quantité de 1,5 % à 55 % en poids, de préférence de 4 % à 30 % en poids de la gomme à mâcher
et des additifs de gomme à mâcher,
ladite résine comprenant
- une résine naturelle en une quantité allant de 0,5 % à 35 % en poids, de préférence de 4 % à 30 % en poids de la gomme à mâcher,
- une résine synthétique en une quantité allant de 1 % à 35 % en poids, de préférence de 4 % à 30 % en poids de la gomme à mâcher,
le rapport entre la résine synthétique et la résine naturelle étant de 0,5 à 7, de préférence de 0,9 à 6,0,
et ladite gomme à mâcher comprimée comprenant un arôme.

2. Gomme à mâcher comprimée selon la revendication 1, dans laquelle le rapport entre la résine synthétique et la résine naturelle est de 0,9 à 2,0, de préférence de 0,9 à 1,5.

3. Gomme à mâcher comprimée selon la revendication 1 ou 2, dans laquelle lesdits additifs de gomme à mâcher comprennent des édulcorants en une quantité allant de 5 à 95 % en poids de la gomme à mâcher, en particulier de 20 à 80 % en poids, par exemple de 30 à 60 % en poids de la gomme à mâcher.

4. Gomme à mâcher comprimée selon l'une quelconque des revendications 1-3, dans laquelle la tablette de gomme à mâcher comprimée comprend de 0,1 % à 15 % en poids, de préférence de 0,8 % à 5 % en poids, d'agents aromatisants.

5. Gomme à mâcher comprimée selon l'une quelconque des revendications 1-4, dans laquelle la résine naturelle comprend une ou plusieurs résines naturelles différentes.

6. Gomme à mâcher comprimée selon l'une quelconque des revendications 1-5, dans laquelle ladite résine synthétique comprend une ou plusieurs résines synthétiques différentes.

7. Gomme à mâcher comprimée selon l'une quelconque des revendications 1-6, dans laquelle ladite résine naturelle comprend des esters de colophane.

8. Gomme à mâcher comprimée selon l'une quelconque des revendications 1-7, dans laquelle ladite résine naturelle comprend des résines terpénique, par exemple dérivées d'alpha-pinène, de bêta-pinène et/ou de d-limonène, des résines terpéniques naturelles, des esters de glycérol et de colophanes, des colophanes d'huile de pin, des colophanes de bois et autres dérivés, tels que des esters de glycérol et de colophanes partiellement hydrogénées, des esters de glycérol et de colophanes polymérisées, des esters de glycérol et de colophanes partiellement dimérisées, des esters de pentaérythritol et de colophanes partiellement hydrogénées, des esters méthyliques de colophanes, des esters méthyliques partiellement hydrogénés de colophanes ou des esters de pentaérythritol de colophanes et leurs combinaisons.

9. Gomme à mâcher comprimée selon l'une quelconque des revendications 1-8, dans laquelle ladite résine synthétique comprend du poly(acétate de vinyle), des copolymères acétate de vinyle-laurate de vinyle et leurs mélanges.

10. Gomme à mâcher comprimée selon l'une quelconque des revendications 1-9, dans laquelle ladite gomme à mâcher comprend au moins un élastomère à poids moléculaire élevé en une quantité allant de 0,5 à 14 % en poids de ladite gomme à mâcher.

11. Gomme à mâcher comprimée selon l'une quelconque des revendications 1-10, dans laquelle le poids moléculaire (Mn) dudit au moins un élastomère à poids moléculaire élevé est de 50 000 g/mole à 800 000 g/mole.

12. Gomme à mâcher comprimée selon l'une quelconque des revendications 1-11, dans laquelle ladite gomme à mâcher comprend au moins un élastomère de faible poids moléculaire en une quantité de 0 à 20 % en poids de ladite gomme à mâcher.

13. Gomme à mâcher comprimée selon l'une quelconque des revendications 1-12, dans laquelle le poids moléculaire (Mn) dudit au moins un élastomère à faible poids moléculaire est de 1000 g/mole à 50 000 g/mole.

14. Gomme à mâcher comprimée selon l'une quelconque des revendications 1-13, dans laquelle ladite gomme à mâcher comprend des lubrifiants, des agents anti-adhésion et des agents de glissement, tels que les stéarates métalliques, les huiles végétales hydrogénées, les huiles végétales partiellement hydrogénées, les polyéthylèneglycols, les monostéarates de polyoxyéthylène, les graisses animales, les silicates, les dioxydes de silicate, du talc, les stéarates de magnésium, les stéarates de calcium, de la silice fumée, les huiles de coton hydrogénées pulvérulentes, les huiles végétales hydrogénées, de l'huile de soja hydrogénée et leurs mélanges.

15. Gomme à mâcher comprimée selon l'une quelconque des revendications 1-14, dans laquelle la gomme à mâcher est exempte de lubrifiants, d'agents anti-adhésion et d'agents de glissement.

16. Gomme à mâcher comprimée selon l'une quelconque des revendications 1-15, dans laquelle les résines naturelles confèrent une texture améliorée et collante à la gomme à mâcher lorsqu'elles sont appliquée dans une formulation de gomme à mâcher.

17. Gomme à mâcher comprimée selon l'une quelconque des revendications 1-16, dans laquelle ladite gomme à mâcher est exempte de cire.

18. Gomme à mâcher comprimée selon l'une quelconque des revendications 1-17, dans laquelle ladite gomme à mâcher est exempte de matière grasse.

19. Gomme à mâcher comprimée selon l'une quelconque des revendications 1-18, dans laquelle la gomme à mâcher présente une teneur en eau inférieure à 2,0 %, de préférence inférieure à 1,5 % en poids de la gomme à mâcher.

20. Gomme à mâcher comprimée selon l'une quelconque des revendications 1-19, dans laquelle ladite gomme à mâcher comprend des matières de charge en une quantité de 0 à 50 % en poids de la gomme à mâcher.

21. Gomme à mâcher comprimée selon l'une quelconque des revendications 1-20, dans laquelle ladite gomme à mâcher comprend de la résine synthétique en une quantité de 1,5 à 35 % en poids de la gomme à mâcher.

22. Gomme à mâcher comprimée selon l'une quelconque des revendications 1-21, dans laquelle ladite gomme à mâcher comprend des émulsifiants et/ou des matières grasses dans une quantité de 1 à 45 % en poids de la gomme à mâcher.

23. Gomme à mâcher comprimée selon l'une quelconque des revendications 1-22, dans laquelle ladite gomme à mâcher comprend de la cire en une quantité de 0,5 à 30 % en poids de la gomme à mâcher.

24. Gomme à mâcher comprimée selon l'une quelconque des revendications 1-23, dans laquelle au moins une partie des agents aromatisants ont été incorporés dans la gomme à mâcher formant des granulés ou dans au moins une partie des granulés formant la gomme à mâcher avant la compression.

25. Gomme à mâcher comprimée selon l'une quelconque des revendications 1-24, dans laquelle lesdits additifs de la gomme à mâcher comprennent des ingrédients actifs.

26. Gomme à mâcher comprimée selon l'une quelconque des revendications 1-25, dans laquelle au moins une partie desdits ingrédients actifs a été incorporée dans la gomme à mâcher formant des granules ou dans au moins une partie des granules formant la gomme à mâcher avant la compression.

27. Gomme à mâcher comprimée selon l'une quelconque des revendications 1-26, dans laquelle la gomme à mâcher a été enrobée.
